# EUROPEAN PATENT APPLICATION

(11) **EP 4 685 349 A1**
(43) Date of publication of application: **28.01.2026**
(21) Application number: 24190505.8
(22) Date of filing: 24.07.2024
(51) Int. Cl.: F04B 35/04

(54) **LINEAR COMPRESSOR WITH A LINEAR ELECTRIC MOTOR AND HOUSEHOLD APPLIANCE**

(71) Applicant: BSH Hausgeräte GmbH, 81739 München (DE)
(72) Inventor: Vapnár, Jozef, 07101 Michalovce (SK); Blaz, Robert, 06601 Humenne (SK); Bocinec, Matus, 07101 Michalovce (SK)

(57) **Abstract**

Disclosed is a linear compressor for a household appliance, for instance a refrigerator, wherein a yoke-magnet-arrangement is clamped in such a way on a cylinder of a cylinder-piston arrangement that temperature expansions of the yoke-magnet-arrangement are enabled; in particular by forcing the yoke-magnet-arrangement via a spring force against a fixed stop of the cylinder, and a household appliance.

## Description

The present invention relates to a linear compressor for a household appliance with a linear electric motor comprising a stator with a coil and a movable system, and a household appliance.

Several linear compressors with linear electric motors are known from the prior art. US8876497B2 discloses a linear compressor comprising a cylinder having a compression space for refrigerant therein, a piston that reciprocates linearly within the cylinder in an axial direction to compress the refrigerant, and a frame having a mounting hole so that one end of the cylinder can be mounted thereon and a deformation preventing portion in a portion around the mounting hole that is brought into contact with the one end of the cylinder. Even if the size of the cylinder is increased and the size of the frame is limited, the frame obtains sufficient strength to support the cylinder, thereby reducing mounting deformations and improving operational reliability. One disadvantage of this linear compressor is that the linear compressor is subject to strong temperature changes due to the compression of the coolant, which can damage the moving parts of the linear compressor. This can shorten the service life of the linear compressor.

The problem of the present invention is therefore to provide a linear compressor with a linear electric motor which ensures reliable operation even in the event of severe temperature changes and a household appliance having a reliable compressor.

The problem is solved by a linear compressor with the features of claim 1 and with a household appliance according to claim 11.

The invention relates to a linear compressor for a household appliance with a linear electric motor comprising a stator with a coil and a movable system (mover). The movable system is movable in axial direction. It comprises a yoke-magnet-arrangement, a cylinder and a spring. The yoke-magnet-arrangement has an annular yoke which is arranged on the cylinder and carries a magnetic ring. The spring the yoke-magnet-arrangement is pressed against an unmovable stop on the cylinder limiting an axial movement of the yoke-magnet-arrangement on the cylinder at one side. The yoke has a shoulder facing the unmovable stop and limiting an axial movement of the magnetic ring on the yoke at the other side.

The cylinder of the linear compressor can move along a linear path to minimize friction and reduce energy loss during motion conversion compared to conventional compressors. This technology has been successfully used in cryogenic applications, which can be oil-free. The linear compressor with valve therefore enables the use of compact heat exchangers. The linear compressor can be connected to alternating current, for example by means of a diode. The cylinder can be spring-loaded and moved relative to a fixed piston by means of the mover, which is driven by the linear electric motor. During a positive cycle of the alternating current, the diode allows current to flow through the stator's electromagnet and creates a magnetic field which acts on the mover and consequently moves the cylinder backwards away from the piston, compressing the spring and consequently creating suction so that the gas medium or coolant is drawn into a compression chamber. During a negative cycle of the alternating current, the diode can block the current flow to the stator's electromagnet, which relaxes the spring, moves the piston forward and compresses the refrigerant. The compressed refrigerant can then be discharged via a valve to achieve the desired cooling effect. Preferably, the coil has a cylindrical shape. The magnetic ring can be a permanent magnet. The yoke is used to distribute the magnetic field so that the driving force of the linear electric motor is amplified.

A preferred household has a linear compressor according to the invention. An exemplary household appliance is a refrigerator.

If the spring acts directly on the yoke, the number of parts is reduced and a response behaviour of the system is optimized.

Preferably, the spring is ring and has a wave-like shape. By means of this, a compact design is realized. Alternatively, spiral or coil springs are preferred.

In addition, the spring can be a retaining ring which is arranged in a cylinder groove. By means of this, a technical easy and reliable arrangement of the spring is realized.

Alternatively, the spring is a ring which is hold in place on the cylinder via an insert which surrounds the cylinder and acts as a spring support. By meany of this, no groove has to be provided in the cylinder. Further on, the insert can help centering the ring on the cylinder.

In one embodiment, the yoke is split into two annular yoke parts each having a shoulder for limiting an axial movement of the magnetic ring. By means of this, the magnetic ring is fixed axially by two opposing yoke shoulders.

In order to avoid any axial movement of the magnetic ring on the yoke, an axial extension of a receiving area for the magnetic ring is less than an axial extension of the magnetic ring.

In another embodiment, the yoke has a tube-like section for receiving the magnetic ring, wherein its axial extension is less than the axial extension of the magnetic ring. By means of this, only one shoulder for the magnetic ring is provided by the yoke. The second shoulder is the unmovable stop of the cylinder.

In a further embodiment, the yoke has a tube-like section with axial projections at its front face The projections are adapted to be passed between radial projections of the cylinder which are spaced apart from another in circumferential direction and which form the unmovable stop of the cylinder. By means of this, a rotation of the yoke on the cylinder is prevented.

In order to avoid any axial movement of the magnetic ring on the yoke, the tube-like section for receiving the magnetic ring has an axial extension which is less than the axial extension of the magnetic ring.

In what follows, preferred embodiments of the present invention are explained with respect to the accompanying drawings. As is to be understood, the various elements and components are depicted as examples only, and they may be facultative and/or combined in a manner different than that depicted. Reference signs for related elements are used comprehensively and not defined again for each figure. Shown is schematically in
- Fig. 1: a schematic representation of a linear compressor with a linear electric motor;
- Fig. 2a to 2d: enlarged views of first embodiment of a yoke-magnet arrangement of the linear compressor from Fig. 1;
- Fig. 3a to 3d: enlarged views of second embodiment of a yoke-magnet arrangement of the linear compressor from Fig. 1;
- Fig. 4a to 4d: enlarged views of a third embodiment of a yoke-magnet arrangement of the linear compressor from Fig. 1; and
- Fig. 5 a to 5d: enlarged views of a fourth embodiment of a yoke-magnet arrangement of the linear compressor from Fig. 1.

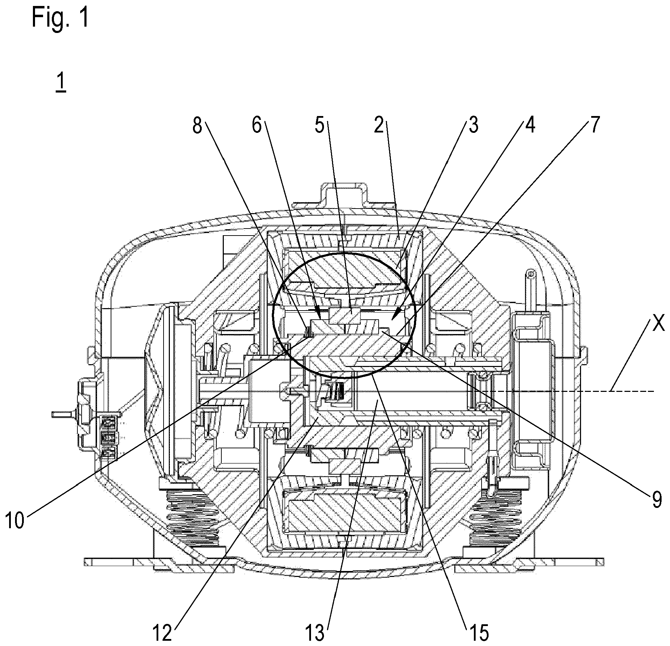

Fig. 1 shows a schematic representation of a linear compressor 1 with a linear electric motor. A preferred household appliance having such linear compressor is a refrigerator.

The linear electric motor comprises a stator 2 with a coil 3 and a movable system (mover) 4. The movable system 4 is movable in axial direction x. It comprises a yoke-magnet arrangement (5, 6), a cylinder 7 and a spring 8.

The yoke-magnet-arrangement comprises an annular yoke 6 which is arranged on the cylinder 7 and a magnetic ring 5. The magnetic ring 5 is positioned on the yoke 6 which the magnetic field. The magnetic ring 5 is a permanent magnet.

The spring 8 is pressed against an unmovable stop 9 on the cylinder 7 and limits an axial movement of the yoke-magnet-arrangement on the cylinder 7 at one side, here the right side according to the illustration.

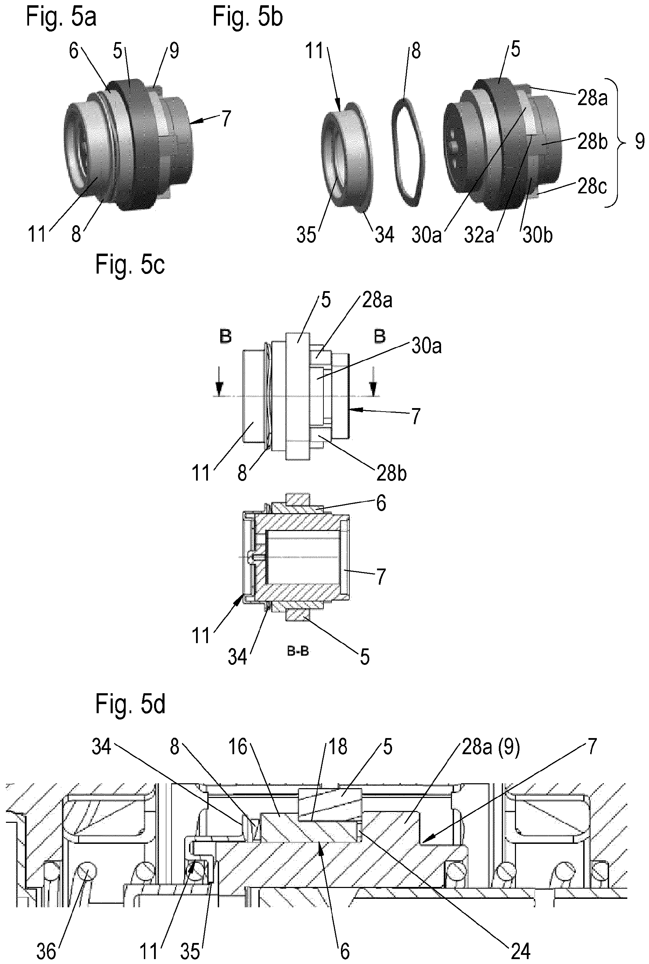

In the first embodiment shown in Figure 1, the spring 8 is an opened retaining ring with a wave-like shape and arranged in an annular groove 10 in an outer surface of the cylinder 7. However, as shown in Figures 5a to 5b, the spring 8 can also be a closed wave ring which is hold in place via an insert 11 surrounding the cylinder 7 and acting as a spring support.

The yoke 6 has a (counter-) shoulder 16 facing the unmovable stop 11 and limiting an axial movement of the magnetic ring 5 on the yoke 6 at the other side which is here the left side according to the illustration.

A piston 12 is arranged inside the cylinder 7, whereby a gas medium or a coolant is compressed in a chamber 13 between the piston 12 and the cylinder 7 by an oscillating movement of the cylinder 7 relative to the stationary piston 12.

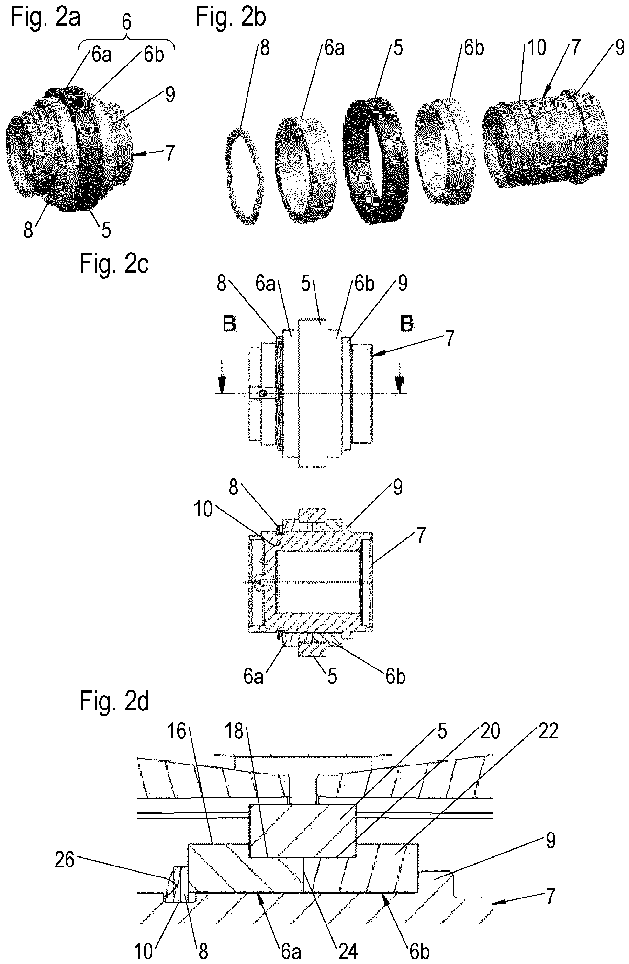

With reference to Figures 2a - 2d, 3a - 3d, 4a - 4d and 5a - 5d, preferred embodiments of the circled area 14 are explained in detail.

According to the first embodiment of the movable system 4, shown in Figures 1, 2a to 2d, the yoke-magnet-arrangement comprises a yoke 6 which is split into two parts 6a, 6b along a vertical plane z. The yoke parts 6a, 6b are symmetrical to the vertical plane z. Both comprise a tube-like section 18, 20 for receiving the magnetic ring 7 and a radial outer shoulder 16, 22 for positioning the magnetic ring 5 axially on the tube-like sections 18, 20. If the annular yoke parts 6a, 6b are put together, an axial extension of a receiving area formed by the two tube-like sections 18, 20 for the magnetic ring 5 is less than an axial extension of the magnetic ring 5. Between the yoke parts 6a, 6b a gap 24 can be provided for tolerance compensation of the yoke parts 6a, 6b and the magnetic ring 5, for instance. In order to avoid any negative impact on the electromagnetic field distribution, the gap 24 between the yoke parts 6a, 6b is minimized as far as possible, whereas tolerance compensation of the yoke-magnet-arrangement remains.

The cylinder 7 has a radial outer shoulder forming the unmovable stop 19. In an axial distance from the unmovable stop 9, the annular groove 10 is provided in the cylinder 7 adapted to receive the spring 8.

The spring 8 is a wave-shaped retaining ring which is adapted to be inserted into the annular groove 10.

The axial distance between the unmovable stop 9 and the groove 10 is such that thermal expansions of the yoke-arrangement and/or the cylinder 7 can be balanced. The unmovable stop 9 of the cylinder 7 defines a rigid shoulder in the right direction whereas due to the elastic counter-stop released by the spring 8 the yoke-magnet-arrangement can expand slightly to the left, such that thermal stress is avoided. Thereby, the yoke-magnet-arrangement always has a defined axial position as it is forced against the unmovable stop 9 by the spring 8.

In the assembled state, the magnetic ring 5 is positioned on the tube-like sections 18, 20 of the yoke parts 6a, 6b and clamped between their shoulders 16, 22. This yoke parts 6a, 6b are clamped between the unmovable stop 9 and the retaining ring 8 (spring). Thereby, due to the retaining ring 8 (spring) the yoke-magnet-arrangement (5, 6a, 6b) can move slightly in axial direction x which allows a tolerance compensation due to temperature changes, for instance.

In other words, the first embodiment has a single wave retaining ring as spring 8, and two symmetrically and equal yokes parts 6a, 6 which in their assembled state axially extends over the magnetic ring 5. The wave retaining ring 8 is supported against a groove wall 26 and applies an axial pressure force in the direction to the unmovable stop 9, in particular against the first yoke part 6a, from the first yoke part 6a to the magnetic ring 5, via the magnetic ring 5 to the second yoke part 6b and via the second yoke part 6b to the unmovable stop 9.

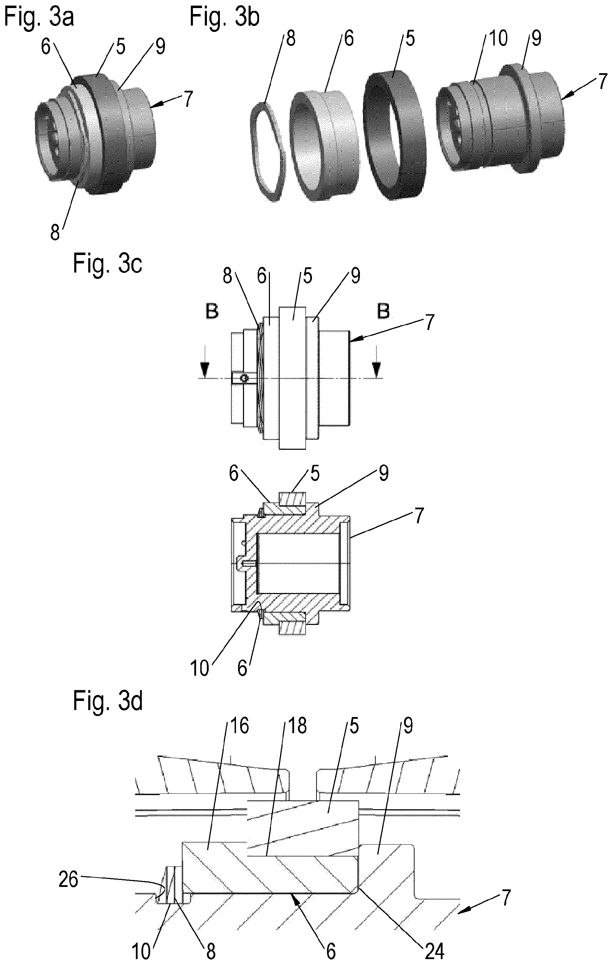

According to a second embodiment of the movable system 4, shown in Figures 3a to 3d, the yoke-magnet-arrangement comprises a single piece yoke 6. The yoke 6 has a tube-like section for receiving the magnetic ring 5 and a radial outer shoulder 16 for limiting a movement of the magnetic ring 5 axially to the left side on the tube-like section 18. An axial extension of a receiving area formed by the tube-like section 18 for the magnetic ring 5 is less than an axial extension of the magnetic ring 5 such that in an assembled state a gap 24 is established between the unmovable stop 9 and the yoke 6.

The cylinder 7 also have an annular groove 10 for receiving the spring 8 which is in this embodiment a retaining ring as well.

In the assembled state, the magnetic ring 5 is positioned on the tube-like section 18 and clamped between the unmovable stop 9 of the cylinder 7 and the spring 8 (retaining ring) in the groove 10. Thereby, due to the retaining ring 7 (spring) the yoke-magnet arrangement (5, 6) can move slightly in axial direction x which allows a tolerance compensation due to temperature changes, for instance.

In other words, the second embodiment has a single wave retaining ring as spring 8 as well, but a single piece yoke 6. The tube-like section 18 of the yoke 6 does not extend the magnetic ring 5 axially. The wave retaining ring 8 applies an axial pressure force against the groove wall 26 in the cylinder 7, and against the yoke-magnet-arrangement (5, 6) forcing the magnetic ring 5 against the unmovable stop 9, in particular against the yoke 6, from its shoulder 16 to the magnetic ring 5 and via the magnetic ring 5 to the unmovable stop 9. As the yoke 6 does not have a right shoulder, the magnetic ring 5 is in direct contact with the unmovable stop 9.

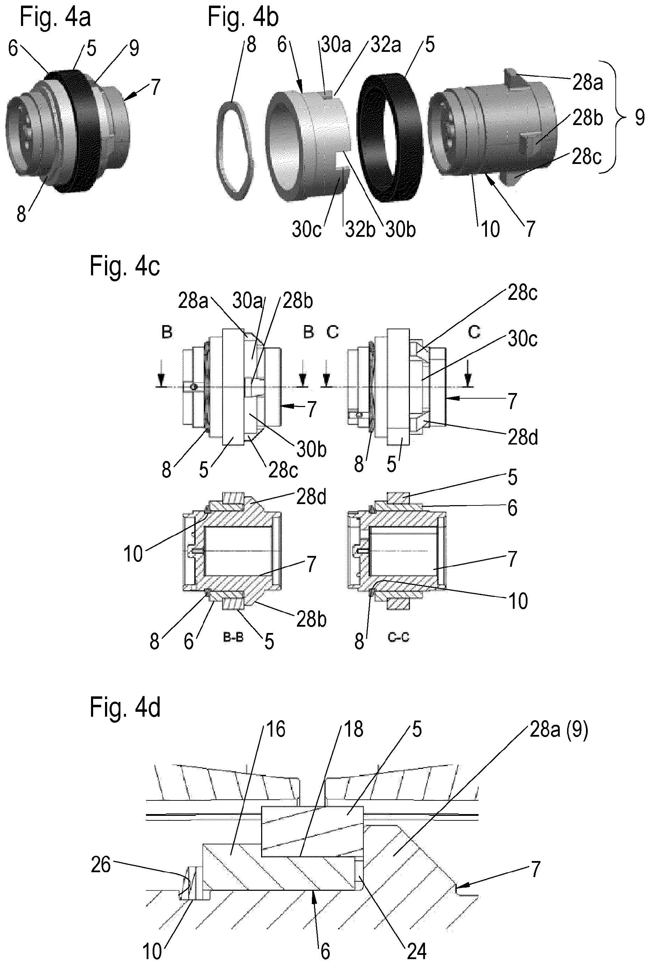

According to a third embodiment of the movable system 4, shown in Figures 4a to 4d, the yoke-magnet-arrangement comprises a single piece yoke 6 as well. The yoke 6 also has a tube-like section 18 for receiving the magnetic ring 5 and a radial outer shoulder 16 for positioning the magnetic ring 5 axially on the tube-like section 18.

In difference to the second embodiment, the unmovable stop 9 of the cylinder 7 is not a radial outer shoulder, but has several radial projections 28a, 28b ,28c, 28d which are distributed evenly over the circumference of the cylinder 7. Here, four radial projections 28a, 28b, 28c, 28d are provided. In order to interact with this teeth-like radial projections 28a, 28b, 28c, 28d, the pipe-section 18 of the yoke 6 has at its front face a plurality of axial projections 30a, 30 defining recesses between 32a, 32b them. Here, four radial projections 28a, 28b, 28c, 28d four axial projections 30a, 30b and four recesses 32a, 32b are provided. The recesses 32a, 32b have such an extension in circumferential direction that the radial projections 28a, 28b ,28c of the cylinder 7 can be inserted during assembly. An axial extension of a receiving area formed by the tube-like section 18 for the magnetic ring 5 is less than an axial extension of the magnetic ring 5 such that in an assembled state a gap 24 is established between the unmovable stop 9 and the yoke 6.

The cylinder 7 also have an annular groove 10 for receiving the spring 8 which is in this embodiment a retaining ring as well.

In the assembled state, the magnetic ring 5 is positioned on the tube-like section 18 and clamped between the unmovable stop 9 (radial projections 28a, 28b, 28c) of the cylinder 7 and the spring 8 (retaining ring) in the groove 10. The axial projections 30a, 30b of the yoke 6 is positioned between the radial projections 28a, 28b, 28c, 28d of the cylinder 7 and vis versa. Thereby, due to the retaining ring 8 (spring) the yoke-magnet arrangement (5, 6) can move slightly in axial direction x which allows a tolerance compensation due to temperature changes, for instance.

In other words, the third embodiment has a single wave retaining ring 8 as spring and a single piece yoke 6. Via its axial projections 30a, 30b the yoke 6 extends over the entire axial extension of the magnetic ring 5 (it passes both sides of magnetic ring 5) which has a positive impact on the electromagnetic field distribution. The wave retaining ring 5 applies pressure against the groove wall 26 in cylinder 7, and against the yoke-magnet-arrangement forcing the magnetic ring 5 against the unmovable stop 9, in particular against the yoke 6, from its shoulder 16 to the magnetic ring 5 and via the magnetic ring 5 to the unmovable stop 9. As the yoke 6 does not have a right shoulder, the magnetic ring 5 is in direct contact with the unmovable stop 9.

According to a fourth embodiment of the movable system 4, shown in Figures 5a to 5d, the yoke-magnet-arrangement comprises a single piece yoke 6 as well. The yoke-arrangement and the cylinder 7 are designed according the second embodiment, i.e. the cylinder 7 has a several radial projections 28a, 28b, 28c, 28d as unmovable stop 9 which are distributed evenly over the circumference of the cylinder 7, and the yoke 6 has at its front face a plurality of axial projections 30a, 30b defining recesses 32a, 32b between them. Here, four radial projections 28a, 28b, 28c, 28d four axial projections 30a, 30b and four recesses 32a, 32b are provided as well. The recesses 32a, 32b have such an extension in circumferential direction that the radial projections 28a, 28b, 28c, 28d of the cylinder 7 can be inserted during assembly. An axial extension of a receiving area formed by the tube-like section 18 for the magnetic ring 5 is less than an axial extension of the magnetic ring 5 such that in an assembled state a gap 24 is established between the unmovable stop 9 and the yoke 6.

In difference to the third embodiment, the cylinder 7 does not haven annular groove 10 for receiving a retaining ring as spring 8. According to the fourth embodiment, the spring 8 is a wave ring which is positioned on the outer surface of the cylinder 7 and hold in place via an insert 11 acting a spring support. The insert 11 has a ring-like shape with a radial outer shoulder 34 and a radial inner ring element 35 which extends in the interior of the cylinder 7 and against which a piston spring 36 is pressed. By means of the piston spring 36, the insert 11 is fixed on the cylinder 7. As the piston spring 36 is much stronger than the spring 8 holding the yoke-magnet-arrangement, the spring 8 is quasi fixed axially on the cylinder 7. During thermal expansion of the yoke-magnet-arrangement, the spring 8 won't move backwards due to the strong piston spring.

In the assembled state, the magnetic ring 5 is positioned on the tube-like section 18 and clamped between the unmovable stop 9 (radial projections 28a, 28b, 28c, 28d) of the cylinder 7 and the spring 8 (wave ring) which is hold in place via the insert 11. The axial projections 30a, 30b of the yoke 6 are positioned between the radial projections 28a, 28b, 28c, 28d of the cylinder 7 and vis versa. Thereby, due to the wave ring 7 (spring) the yoke-magnet arrangement (5, 6) can move slightly in axial direction x which allows a tolerance compensation due to temperature changes, for instance.

In other words, the third embodiment does not need any cylinder groove. Instead of a cylinder groove, an insert 11 is provided for supporting the spring 8. The insert 11 is releasable fixed to one side of the cylinder 7. In addition, as no groove is needed for keeping the spring 8 in place on the cylinder 7, the spring 8 can be a closed wave ring. Further on, the insert 11 acts as centering device for the wave ring (spring 8) on the cylinder 7.

It should be noted that also the first, second and thirds embodiments can be equipped with the insert 11 instead of providing a cylinder groove 10.

Disclosed is a linear compressor for a household appliance, for instance a refrigerator, wherein a yoke-magnet-arrangement is clamped in such a way on a cylinder of a cylinder-piston arrangement that temperature expansions of the yoke-magnet-arrangement are enabled; in particular by forcing the yoke-magnet-arrangement via a spring force against a fixed stop of the cylinder, and a household appliance.

### Reference signs

- 1: linear compressor
- 2: stator
- 3: coil
- 4: movable system
- 5: magnet ring
- 6: yoke
- 7: cylinder
- 8: spring
- 9: unmovable stop
- 10: annular groove (cylinder grove)
- 11: insert
- 12: piston
- 13: chamber
- 14: circled area
- 16: shoulder of the yoke
- 18: tube-like section
- 20: tube-like section
- 22: shoulder of the yoke
- 24: gap between yoke parts
- 26: groove wall
- 28a, 28b ,28c, 28d: radial projection
- 30a, 30b: axial projection
- 32a, 32b: recess
- 34: shoulder of the insert
- 35: inner ring element
- 36: piston spring

## Claims

1. Linear compressor (1) for a household appliance, having
a linear electric motor, comprising
• a stator (2) with a coil (3);
• and a movable system (4) which is movable in axial direction (x) and comprises
∘ a yoke-magnet-arrangement (5, 6);
∘ a cylinder 7; and
∘ a spring 8;
- wherein the yoke-magnet-arrangement comprises an annular yoke (6) which is arranged on the cylinder (7) and carries a magnetic ring (5);
- wherein via the spring (8) the yoke-magnet-arrangement (5, 6) is pressed against an unmovable stop (9) on the cylinder (7) limiting an axial movement of the yoke-magnet-arrangement (5, 6) on the cylinder (7) at one side; and
- wherein the yoke (6) has a shoulder (16) facing the unmovable stop (9) and limiting an axial movement of the magnetic ring (5) on the yoke (6) at the other side.

2. Linear compressor according to claim 1, wherein the spring (8) acts directly on the yoke.

3. Linear compressor according to claims 1 or 2, wherein the spring (8) is a ring and has a wave-like shape.

4. Linear compressor according to claims 1, 2 or 3, wherein the spring (8) is a retaining ring and arranged in a cylinder groove (10).

5. Linear compressor according to any of claims 1, 2 or 3, wherein the spring (8) is a ring which is hold in place via an insert (11) surrounding the cylinder (7) and acting as a spring support.

6. Linear compressor according to any of claims 1 to 4, wherein the yoke (6) is split into two annular yoke parts (6a, 6b) each having a shoulder (16, 22) for limiting an axial movement of the magnetic ring (5).

7. Linear compressor according to claim 6, if the circular yoke parts (6a, 6b) are put together, an axial extension of a receiving area (18, 20) for the magnetic ring (5) is less than an axial extension of the magnetic ring (5).

8. Linear compressor according to any of claims 1 to 5, the yoke has a tube-like section (18) for receiving the magnetic ring (5) wherein its axial extension is less than the axial extension of the magnetic ring (5).

9. Linear compressor according to any of claims 1 to 5, wherein the yoke has a tube-like section (18) with axial projections (30a, 30b) at its front face which are adapted to be passed between radial projections (28a, 28b, 28c, 28d) of the cylinder (7) which are spaced apart from another in circumferential direction and which form the unmovable stop (9) on the cylinder (7).

10. Linear compressor according to claim 9, the tube-like section (18) for receiving the magnetic ring (5) has an axial extension which is less than the axial extension of the magnetic ring (5).

11. Household appliance having a linear compressor (1) according to any of the preceding claims.
